# DEMANDE DE BREVET EUROPEEN

(11) **EP 3 838 382 A1**
(43) Date de publication de la demande: **23.06.2021**
(21) Numéro de dépôt: 20212765.0
(22) Date de dépôt: 09.12.2020
(51) Int. Cl.: B01D 53/62, B01D 53/75, C10G 11/18, C10K 1/00, C10K 1/32, C10K 3/04, F25J 3/02, F25J 3/06

(54) **PROCÉDÉ ET APPAREIL DE SÉPARATION DE DIOXYDE DE CARBONE D'UN GAZ RÉSIDUAIRE D'UNE INSTALLATION DE CRAQUAGE CATALYTIQUE SUR LIT FLUIDISÉ (FCC)**

(30) Priorité: 19.12.2019 FR 1914847
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: RODRIGUES, Guillaume, 94503 CHAMPIGNY SUR MARNE (FR); DUBETTIER-GRENIER, Richard, 94503 CHAMPIGNY SUR MARNE (FR)
(74) Mandataire: Air Liquide

(57) **Abrégé**

Dans un procédé de séparation de dioxyde de carbone d'un gaz résiduaire (3) d'une installation de craquage catalytique sur lit fluidisé (1) contenant du dioxyde de carbone, de l'azote et éventuellement du monoxyde de carbone, on sépare le gaz résiduaire (3) par adsorption pour former un gaz enrichi en dioxyde de carbone et appauvri en azote (29) et un gaz riche en azote et appauvri en dioxyde de carbone (31) et on sépare dans un appareil de séparation (30) au moins une partie du gaz enrichi en dioxyde de carbone et appauvri en azote par séparation à une température inférieure à 0°C par condensation partielle et/ou par distillation pour former un fluide riche en dioxyde de carbone (35) et un fluide appauvri en dioxyde de carbone (37).

## Description

La présente invention est relative à un procédé et à un appareil de séparation de dioxyde de carbone d'un gaz résiduaire d'une installation de craquage catalytique sur lit fluidisé.

Les pourcentages indiquant des puretés dans ce document sont des pourcentages molaires, sauf indication contraire.

Une des sources principales d'émission de CO2 dans le raffinage du pétrole est le craquage catalytique sur lit fluidisé, souvent désigné par le sigle FCC (« fluidised catalytic cracking »). Le craquage produit entre 20 et 50% des émissions de la raffinerie et le gaz résiduaire qu'il produit contient entre 10 et 20% de dioxyde de carbone et éventuellement du monoxyde de carbone.

Le craquage catalytique en lit fluidisé est un procédé de raffinage qui a pour but de transformer, en présence d'un catalyseur, les coupes lourdes à longues chaînes d'hydrocarbonés en coupes légères pour être utilisées dans la fabrication du carburant.

En présence du catalyseur, à haute température (450 à 550 °C) et à pression quasi atmosphérique, on casse les grosses molécules hydrocarbonées pour avoir de petites molécules ayant un indice d'octane élevé.

Le procédé industriel, connu depuis 1928, est basé sur l'utilisation d'un lit fluidisé de catalyseur qui circule entre un réacteur et un régénérateur. La charge (provenant typiquement des unités de distillation et distillation sous vide de la raffinerie) est injectée avec le catalyseur entrant dans le réacteur dans une canalisation (aussi appelé « riser ») où se déroule la réaction de craquage. Les produits de la réaction de craquage catalytique sortant de la canalisation sont séparés du catalyseur au moyen de séparateurs mécaniques (typiquement des cyclones) puis sont envoyés dans la tour de fractionnement.

Lors de la réaction de craquage, du coke se forme à la surface du catalyseur qui s'écoule de manière continue entre le réacteur et le régénérateur où ce coke va être au moins partiellement oxydé principalement en CO et CO2 par injection d'air (éventuellement enrichi en oxygène).

Le catalyseur peut ainsi être totalement ou partiellement (c'est-à-dire que le coke n'est pas complètement éliminé) régénéré, puis retourne au réacteur.

Un gaz résiduaire, appelé en anglais « flue gas », contenant du dioxyde de carbone et de l'azote et éventuellement du monoxyde de carbone, par exemple entre 10 et 20¨ de CO2 et entre 0 et 10% de monoxyde de carbone typiquement 12.5% CO2, 7.5% CO, 80% N2, tous les pourcentages de ce document étant des pourcentages molaires (sur base sèche), est produit dans le régénérateur.

Il est à nouveau séparé du catalyseur et des poussières par des séparateur mécaniques gaz/solide (en général des cyclones) dans le régénérateur puis éventuellement dans un précipitateur électrostatique. Les conditions de ce gaz résiduaire à la sortie du régénérateur sont typiquement une température entre 500 et 850°C, une pression entre pression atmosphérique et 5 barg Les exemples de ce document considéreront comme hypothèses une température de 715°C et une pression de 2,4 barg, Le gaz résiduaire est ensuite détendu (dans une turbine ou bien dans une vanne) jusqu'à la pression atmosphérique puis, s'il contient du CO, est traité pour convertir le monoxyde de carbone en dioxyde de carbone dans un convertisseur appelé « CO boiler ». Ce convertisseur produit de la chaleur qui est utilisée pour produire de la vapeur d'eau ou pour réchauffer un autre fluide (par exemple de l'huile chaude).

En cas de capture de CO2, l'état de l'art est ensuite de traiter ce gaz résiduaire enrichi en dioxyde de carbone par lavage aux amines pour enlever le dioxyde de carbone qu'il contient. Ce lavage consomme beaucoup de vapeur d'eau qui n'est pas nécessairement disponible en excès sur site et dont la production consomme des combustibles fossiles.

Il est connu de US4542114 de modifier un FCC pour alimenter le régénérateur par un gaz oxydant constitué par un mélange de dioxyde de carbone (éventuellement recyclé) et entre 24 et 30% d'oxygène au lieu de l'air. Le gaz réagit avec le coke pour libérer de la chaleur et régénérer le catalyseur. Le gaz résiduaire formé dans le régénérateur contient 83% de dioxyde de carbone, 9% d'eau, 7% de monoxyde de carbone, 0,5% d'oxygène, 0,5% d'oxydes de soufre et 500ppm de NOx. Le monoxyde de carbone est oxydé en dioxyde de carbone en présence d'oxygène. Les gaz de combustion chauds sont refroidis en générant de la vapeur d'eau. Ils peuvent être ensuite purifiés (pour éliminer les impuretés tel que SOx, NOx, puis l'excès d'oxygène et autres gaz de l'air (N2, Ar)) et éventuellement comprimés et séchés (voire liquéfiés suivant leur usage final) "CO2 Capture Project Phase 3-Oxyfuel Large Scale Pilot and Démonstration Projects », 2nd Oxyfuel Combustion Conférence 2011 décrit le fonctionnement d'un FCC en mode oxycombustion. Une partie du gaz résiduaire produit est recyclée à la combustion. Dans ce cas, le gaz résiduaire produit par le régénérateur comprend généralement entre 80 et 98 % vol de dioxyde de carbone (base sèche).

Les procédés FCC utilisant une oxycombustion dans le régénérateur impliquent des modifications significatives sur le cœur du procédé, sur la façon de régler en marche stable les équilibres subtils de cette unité (débit de catalyseur circulant, transfert thermique, coke résiduel sur le catalyseur), et sur la façon de démarrer/stabiliser le fonctionnement de l'unité. C'est la raison pour laquelle, les opérateurs de FCC sont aujourd'hui réticents vis-à-vis de cette technologie qui n'est pas encore référencée à l'échelle industrielle.

Afin de surmonter ces difficultés, la présente invention propose de ne pas modifier de manière significative le cœur du procédé FCC (=le réacteur et le régénérateur), mais de traiter de manière innovante le gaz résiduaire du régénérateur en produisant un gaz résiduaire de FCC 'concentré' mais contenant moins que 80% de dioxyde de carbone, préférentiellement entre 60 et 70% CO2, voire légèrement moins que 50% de dioxyde de carbone. Cette concentration peut s'effectuer en enrichissant le gaz résiduaire en CO2 dans une unité d'adsorption après avoir éventuellement converti le monoxyde de carbone encore présent dans le gaz résiduaire en CO2.

Selon un objet de l'invention, il est prévu un procédé de séparation de dioxyde de carbone d'un gaz résiduaire d'une installation de craquage catalytique sur lit fluidisé contenant du dioxyde de carbone, de l'azote et éventuellement du monoxyde de carbone, dans lequel :
i) Eventuellement on convertit au moins une partie du monoxyde de carbone du gaz résiduaire en dioxyde de carbone pour former un débit enrichi en dioxyde de carbone,
ii) On sépare le gaz résiduaire, ou le cas échéant, le débit enrichi en dioxyde de carbone de l'étape i), par adsorption pour former un gaz enrichi en dioxyde de carbone et appauvri en azote et un gaz riche en azote et appauvri en dioxyde de carbone et
iii) On sépare dans un appareil de séparation au moins une partie du gaz enrichi en dioxyde de carbone et appauvri en azote par séparation à une température inférieure à 0°C par condensation partielle et/ou par distillation pour former un fluide riche en dioxyde de carbone et un fluide appauvri en dioxyde de carbone.

Selon d'autres caractéristiques facultatives :
- le gaz résiduaire est filtré en amont de l'étape i) pour enlever des particules de catalyseur et/ou de poussière.
- on comprime le débit enrichi en dioxyde de carbone en amont de l'étape ii) jusqu'à une pression entre 2.5 et 10 bars abs.
- le gaz riche en azote et appauvri en dioxyde de carbone contient moins que 5% mol de CO2, voire moins de 3% de CO2 ou même moins que 1,5% de CO2.
- le gaz enrichi en dioxyde de carbone contient plus que 45% mol de CO2, voire plus que 50% de CO2 ou même plus que 70% de CO2, ou encore plus de 80% CO2.
- le fluide appauvri en dioxyde de carbone contient au plus 15% de CO2.
- le fluide appauvri en dioxyde de carbone est comprimé et mélangé avec le débit enrichi en dioxyde de carbone envoyé à l'étape ii).
- on détend le gaz riche en azote et appauvri en dioxyde de carbone dans une turbine et on l'envoie à l'atmosphère, éventuellement après réchauffage.
- le gaz riche en azote et appauvri en dioxyde de carbone est réchauffé par un fluide provenant de l'installation de craquage catalytique ou par au moins une partie du gaz enrichi en dioxyde de carbone et appauvri en azote ou par au moins une partie du gaz résiduaire, ou au moins une partie du débit enrichi en dioxyde de carbone .
- on détend le gaz résiduaire en amont de l'étape i) dans une turbine et
- on comprime le débit enrichi en dioxyde de carbone dans un compresseur entraîné par la turbine en amont de l'étape ii).
- un générateur d'électricité et/ou un moteur est monté sur le même arbre ou le même multiplicateur que le compresseur du débit enrichi en dioxyde de carbone en amont de l'étape ii) et la turbine du gaz résiduaire.
- on sépare le fluide appauvri en dioxyde de carbone dans une membrane pour produire un perméat enrichi en CO2 et on envoie le perméat en amont de l'étape ii).
- le non-perméat est détendu dans une turbine et/ou mélangé avec le gaz riche en azote et appauvri en dioxyde de carbone et/ou.
- la membrane sépare le fluide à une température inférieure à -30°C.
- le fluide appauvri en dioxyde de carbone et/ou le gaz riche en azote et appauvri en dioxyde de carbone est détendu dans une turbine jusqu'à une température inférieure à 0°C et supérieure à -100°C dans une enceinte contenant l'appareil de séparation.
- une partie du fluide riche en dioxyde de carbone est envoyée à l'unité d'adsorption comme gaz de rinçage.
- on convertit au moins une partie du monoxyde de carbone du gaz résiduaire en dioxyde de carbone pour former un débit enrichi en dioxyde de carbone par combustion à l'air du monoxyde de carbone en présence d'un carburant.
- on convertit au moins une partie du monoxyde de carbone du gaz résiduaire en dioxyde de carbone pour former un débit enrichi en dioxyde de carbone par combustion à l'oxygène du monoxyde de carbone en présence d'un gaz contenant au moins 90% d'oxygène.
- on envoie à la combustion du monoxyde de carbone au moins une partie du gaz riche en azote et appauvri en dioxyde de carbone et/ou au moins une partie du fluide riche en dioxyde de carbone et/ou au moins une partie du fluide appauvri en dioxyde de carbone.
- le gaz résiduaire sortant du régénérateur contient moins que 70% de dioxyde de carbone, de préférence moins que 50% de dioxyde de carbone.
- le gaz résiduaire sortant du régénérateur contient plus que 50% d'azote, de préférence plus que 70% d'azote.
- aucune partie du gaz enrichi en dioxyde de carbone et appauvri en azote n'est envoyée à l'installation de craquage catalytique.
- aucune partie du fluide riche en dioxyde de carbone n'est envoyée à l'installation de craquage catalytique.
- le fluide riche en dioxyde de carbone sert de produit.

L'invention sera décrite de manière plus détaillée en se référant aux figure:
[Fig. 1] représente un procédé selon l'invention.
[Fig. 2] représente un procédé selon l'invention.

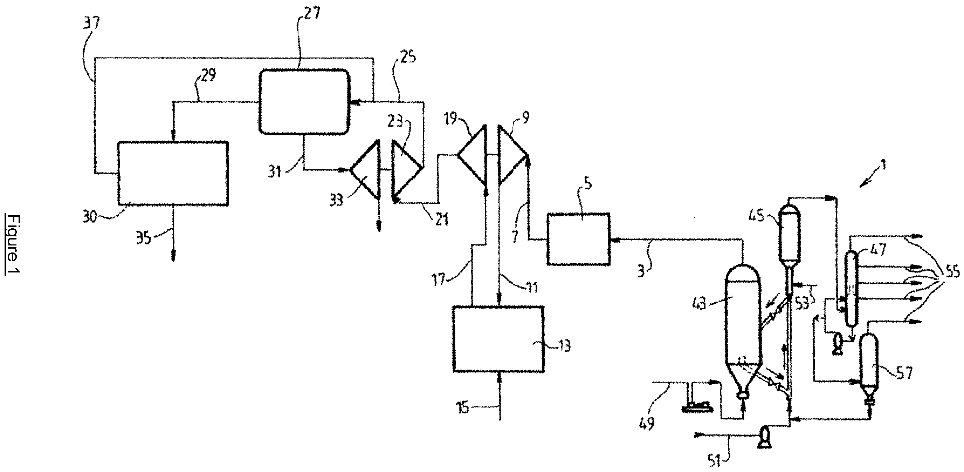

Dans la [FIG. 1], l'unité 1 est une unité de craquage catalytique sur lit fluidisé d'une raffinerie. Elle comprend un réacteur 45 et un régénérateur 43. Dans ce procédé, le catalyseur s'écoule de manière continue entre le réacteur 45 et le régénérateur 43 dans lequel est soufflé de l'air 49 de combustion, puis retourne au réacteur 45 après avoir été débarrassé du coke accumulé sur le catalyseur lors de la réaction. Le réacteur 45 est alimenté par de la vapeur d'eau 53.

L'air 49 peut éventuellement être enrichi en oxygène pour contenir au plus 30% d'oxygène, sans modifier de manière significative la structure de l'unité 1 et les procédés opérés dans l'unité 1.

Après passage des charges 51 dans le réacteur 45, les effluents sont dirigés vers la tour de fractionnement principale 47 pour former les produits 55 du FCC. Le liquide de cuve de la tour 47 est envoyé vers un séparateur de particules en suspension 57. Le fonctionnement de l'unité 1 est bien connu en soi et pour plus de détails on peut se référer à « Fluid Catalytic Cracking Technology and Opérations' de Wilson, 1997 ou « Fluid Catalytic Cracking Handbook » de Sadeghbeigi, 2000. Le gaz résiduaire 3 extrait du régénérateur 43 contient du monoxyde de carbone, du dioxyde de carbone et de l'azote ainsi que des poussières. Après séparation des poussières dans la filtre 5, un gaz épuré 7 est produit contenant par exemple 80% d'azote, 12,5% de dioxyde de carbone et 7,5% de monoxyde de carbone. Ce gaz 7 se trouve à 3,5 bars et 650°C et est détendu dans une turbine 9 ou dans une vanne jusqu'à une pression proche de l'atmosphérique et une température d'environ 450°C. Ce gaz détendu 11 est envoyé à une unité de conversion 13 appelée « CO boiler » où le monoxyde de carbone dans le gaz 11 est converti en dioxyde de carbone, au moins partiellement par combustion à l'air 15. Le procédé de conversion produit également de la vapeur d'eau.

Dans certains modes d'opération de l'unité 1 il est possible de produire un gaz résiduaire contenant très peu de monoxyde de carbone. Dans ce cas, l'étape de conversion dans l'unité 13 n'est pas nécessaire.

Ainsi est produit un gaz 17 à la pression atmosphérique et autour de 120°C contenant 17% de CO2, 3% d'oxygène et 80% d'azote. Le gaz 17 est éventuellement filtré puis comprimé dans un compresseur 19 couplé à la turbine 9 pour produire un gaz comprimé 21.

Un générateur d'électricité et/ou un moteur peut également est disposé sur le même arbre que le compresseur 19 et la turbine 9. Les étages de compression et de détente peuvent être montés sur un multiplicateur intégré (machine centrifuge dite 'multi intégrée' ou en anglais « integrally geared »).

Le gaz comprimé 21 est ensuite comprimé dans un compresseur 23 jusqu'à entre 2,5 et 10 bars, par exemple au moins 8 bars et au moins 30°C comme gaz 25. Le gaz 25 alimente une unité de séparation par adsorption à pression alternée 27, généralement connue sous l'acronyme PSA (en anglais « Pressure Swing Adsorption »). Là il est séparé pour former un gaz enrichi en dioxyde de carbone et appauvri en azote et oxygène 29 (constituant un gaz de queue ou en anglais « tail gas ») et un gaz riche en azote, enrichi en oxygène et appauvri en dioxyde de carbone 31 (constituant le gaz produit ou en anglais « product gas »). Le gaz 31 à environ 8 bars est détendu (après éventuelle préchauffe) dans une turbine 33 couplée au compresseur 23 et relâché à l'atmosphère avec une composition de 97% d'azote et 3% de dioxyde de carbone. Le gaz 31 comprend au plus 5% de dioxyde de carbone, ou au plus 3% de dioxyde de carbone, voire au plus 1,5 % de dioxyde de carbone.

Cette détente dans la turbine 33 peut se faire après réchauffage du gaz 31. Il peut être réchauffé avec un fluide chaud de l'installation de craquage catalytique 1 et/ou par échange avec un fluide sortant d'un étage de compression en amont de l'unité d'adsorption 27 ou en amont de l'unité 30. Il peut même y avoir deux étages de turbine en série avec un réchauffage intermédiaire pour maximiser la récupération d'énergie à l'arbre de la turbine.

L'unité 27 peut être une unité de séparation par adsorption à pression alternée avec régénération sous vide, généralement connue sous l'acronyme VPSA (en anglais « Vacuum Pressure Swing Adsorption ». Dans ce cas, on comprimerait moins le gaz 21 mais l'unité comprendrait des pompes à vide. La pureté du gaz 29 serait plus élevée en CO2 et la consommation électrique de l'unité 27 pourrait être plus basse.

Le gaz 29 contenant entre 50 et 60% de dioxyde de carbone et entre 40 et 50% d'azote et autour de 1% d'oxygène est comprimé à une pression supérieure à 15 bar abs et préférentiellement entre 20 et 30 bar abs (le compresseur est inclus dans l'unité 30), séché puis refroidi dans un appareil de séparation 30 à une température inférieure à 0°C par condensation partielle et/ou par distillation pour former un fluide riche en dioxyde de carbone 35 et un fluide appauvri en dioxyde de carbone 37. Le gaz 29 peut contenir au moins 45% CO2, ou au moins 50% de CO2 ou au moins 80% de CO2.

Le fluide 35 contient au moins 70%, et préférentiellement au moins 95% de dioxyde de carbone sous forme liquide ou gazeuse. Une partie du fluide 35 peut être envoyée à l'unité d'adsorption 27 comme gaz de rinçage. Au moins une partie du fluide 35 sert de produit.

Le fluide 37 contient entre 15 et 25% de dioxyde de carbone ainsi que de l'azote et de l'oxygène et est recyclé en amont de l'unité d'adsorption 27 pour rejoindre le gaz 25 comme débit d'alimentation. Avant d'être mélangé au gaz 25, le fluide 37 peut être détendu dans une vanne ou une turbine ;

Eventuellement on sépare le fluide appauvri en dioxyde de carbone 37 dans une membrane pour produire un perméat enrichi en CO2. Le perméat peut être envoyé à l'unité d'adsorption 27 comme gaz d'alimentation à séparer. Le résidu peut être détendu dans une turbine et/ou mélangé avec le gaz riche en azote et appauvri en dioxyde de carbone 31.

La membrane peut éventuellement séparer le fluide 37 à une température inférieure à -30°C.

Le fluide appauvri en dioxyde de carbone 37 et/ou le gaz riche en azote et appauvri en dioxyde de carbone 31 peut être détendu dans une turbine jusqu'à une température inférieure à 0°C et supérieure à -100°C dans une enceinte contenant l'appareil de séparation 30. Ainsi il contribue à la production de frigories nécessaires.

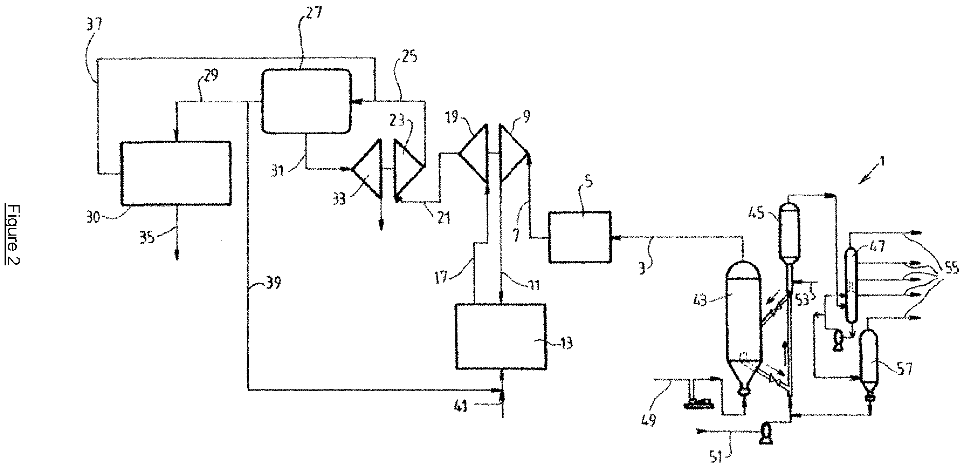

Un sécheur du débit 25 peut être installé en amont de l'unité 27. Une unité de séparation utilisant du charbon activé peut être installée sur le débit 29 en amont de l'unité 30 ou sur le débit 25 en amont de l'unité 27 pour enlever des impuretés. Dans la [FIG. 2], la différence principale avec la [FIG. 1] est que le gaz détendu 11 est envoyé à une unité de conversion 13 où le monoxyde de carbone dans le gaz 11 est converti en dioxyde de carbone, au moins partiellement par combustion à l'oxygène 41. L'oxygène 41 contient au moins 90% d'oxygène et au plus 10% d'azote. Il peut contenir au moins 99,5% d'oxygène. Ainsi le gaz produit contient entre 20 et 30% de CO₂, par exemple 26% de CO₂. Le gaz 29 est plus riche en CO₂ (67%) et le gaz 37 est également plus riche en CO₂ (22%). Une partie 39 du gaz 29 produit par le PSA 27 peut être recyclée vers l'unité de conversion 13 à 1,05 bar et contenant 67% de CO₂.

Au moins une partie du fluide 39 est mélangée à l'oxygène pour former le comburant utilisé par l'unité de conversion 13. En addition ou alternativement, une partie du fluide 35 et/ou une partie du fluide 37 peut être envoyée à l'unité de conversion 13. Ainsi aucune partie du fluide 35 n'est nécessairement envoyée à l'unité de conversion 13.

Le FCC 1 continue à être alimenté par de l'air 49 éventuellement enrichi en oxygène, (comme dans la FIG. 1).

En plus de produire un résiduaire 17 plus riche en dioxyde de carbone, le procédé de la [FIG.2] permet d'augmenter la température de la flamme dans le convertisseur 13 ce qui permet de produire de la vapeur d'eau à une pression plus élevée et/ou à température plus élevée, tout en augmentant l'efficacité de la production de vapeur d'eau. L'unité 27 et l'unité 30 de la [FIG. 2] seront plus petites que celles de la [FIG. 1].

## Revendications

1. Procédé de séparation de dioxyde de carbone d'un gaz résiduaire (3) d'une installation de craquage catalytique sur lit fluidisé (1) contenant du dioxyde de carbone, de l'azote et éventuellement du monoxyde de carbone, dans lequel :
i) Eventuellement on convertit au moins une partie du monoxyde de carbone du gaz résiduaire en dioxyde de carbone pour former un débit enrichi en dioxyde de carbone (17),
ii) On sépare le gaz résiduaire (3), ou le cas échéant, le débit enrichi en dioxyde de carbone (17) de l'étape i), par adsorption pour former un gaz enrichi en dioxyde de carbone et appauvri en azote (29) et un gaz riche en azote et appauvri en dioxyde de carbone (31)
**caractérisé en ce que** l'on sépare dans un appareil de séparation (30) au moins une partie du gaz enrichi en dioxyde de carbone et appauvri en azote par séparation à une température inférieure à 0°C par condensation partielle et/ou par distillation pour former un fluide riche en dioxyde de carbone (35) et un fluide appauvri en dioxyde de carbone (37).

2. Procédé selon la revendication 1 dans lequel on comprime le gaz résiduaire ou le débit enrichi en dioxyde de carbone (17) en amont de l'étape ii) jusqu'à une pression entre 2.5 et 10 bars abs.

3. Procédé selon l'une des revendications précédentes dans lequel le gaz riche en azote et appauvri en dioxyde de carbone (31) contient moins que 5% mol de CO2, voire moins de 3% de CO2 ou même moins que 1,5% de CO2.

4. Procédé selon l'une des revendications précédentes dans lequel le gaz enrichi en dioxyde de carbone (29) contient plus que 45% mol de CO2, voire plus que 50% de CO2 ou même plus que 70% de CO2, ou encore plus de 80% CO2.

5. Procédé selon l'une des revendications précédentes dans lequel le fluide appauvri en dioxyde de carbone (37) contient au plus 15% de CO2.

6. Procédé selon l'une des revendications précédentes dans lequel le fluide appauvri en dioxyde de carbone (37) est comprimé et mélangé avec le débit enrichi en dioxyde de carbone (25) envoyé à l'étape ii).

7. Procédé selon l'une des revendications précédentes dans lequel on détend le gaz riche en azote et appauvri en dioxyde de carbone (31) dans une turbine (33) et on l'envoie à l'atmosphère, éventuellement après réchauffage.

8. Procédé selon la revendication 7 dans lequel le gaz riche en azote et appauvri en dioxyde de carbone (31) est réchauffé par un fluide provenant de l'installation de craquage catalytique (1) ou par au moins une partie du gaz enrichi en dioxyde de carbone et appauvri en azote (29) ou par au moins une partie du gaz résiduaire (3), ou au moins une partie du débit enrichi en dioxyde de carbone (17).

9. Procédé selon l'une des revendications précédentes dans lequel on détend le gaz résiduaire (3) en amont de l'étape i) dans une turbine (9) et on comprime le débit enrichi en dioxyde de carbone (17) dans un compresseur (19) entraîné par la turbine en amont de l'étape ii).

10. Procédé selon la revendication 9 dans lequel un générateur d'électricité et/ou un moteur est monté sur le même arbre ou le même multiplicateur que le compresseur (19) du débit enrichi en dioxyde de carbone en amont de l'étape ii) et la turbine (9) du gaz résiduaire (3).

11. Procédé selon l'une des revendications précédentes dans lequel le fluide appauvri en dioxyde de carbone (37) et/ou le gaz riche en azote et appauvri en dioxyde de carbone (31) est détendu dans une turbine (33) jusqu'à une température inférieure à 0°C et supérieure à -100°C dans une enceinte contenant l'appareil de séparation (30).

12. Procédé selon l'une des revendications précédentes dans lequel une partie du fluide riche en dioxyde de carbone (35) est envoyé à l'étape ii) comme gaz de rinçage.

13. Procédé selon l'une des revendications précédentes dans lequel on convertit au moins une partie du monoxyde de carbone du gaz résiduaire (3) en dioxyde de carbone pour former un débit enrichi en dioxyde de carbone (17) par combustion à l'air du monoxyde de carbone en présence d'un carburant.

14. Procédé selon l'une des revendications précédentes dans lequel aucune partie du gaz enrichi en dioxyde de carbone et appauvri en azote (29) et/ou du fluide riche en dioxyde de carbone (35) n'est envoyée à l'installation de craquage catalytique.

15. Appareil de séparation de dioxyde de carbone d'un gaz résiduaire (3) d'une installation de craquage catalytique sur lit fluidisé (1) contenant du dioxyde de carbone, de l'azote et éventuellement du monoxyde de carbone, comprenant :
i) Une unité de conversion alimentée par le gaz résiduaire capable de convertir au moins une partie du monoxyde de carbone du gaz résiduaire en dioxyde de carbone pour former un débit enrichi en dioxyde de carbone (17),
ii) Une unité d'adsorption (27) capable de séparer le gaz résiduaire (3), ou le cas échéant, le débit enrichi en dioxyde de carbone (17) de l'étape i), par adsorption pour former un gaz enrichi en dioxyde de carbone et appauvri en azote (29) et un gaz riche en azote et appauvri en dioxyde de carbone (31) et
iii) Un appareil de séparation (30) capable de séparer au moins une partie du gaz enrichi en dioxyde de carbone et appauvri en azote par séparation à une température inférieure à 0°C par condensation partielle et/ou par distillation pour former un fluide riche en dioxyde de carbone (35) et un fluide appauvri en dioxyde de carbone (37).
